# EUROPÄISCHE PATENTSCHRIFT

(11) **EP 2 649 343 B1**
(45) Veröffentlichungstag und Bekanntmachung des Hinweises auf die Patenterteilung: **20.02.2019**
(21) Anmeldenummer: 11761612.8
(22) Anmeldetag: 28.09.2011
(51) Int. Cl.: B60G 11/27, F16F 9/04

(54) **LUFTFEDER FÜR NUTZFAHRZEUGE MIT EINEM ROLLBALG AUS ELASTOMEREM WERKSTOFF, DESSEN ENDEN MIT JE EINEM BEFESTIGUNGSWULST VERSEHEN SIND**
AIR SPRING FOR COMMERCIAL VEHICLES COMPRISING A ROLLING LOBE MADE OF AN ELASTOMERIC MATERIAL, THE ENDS OF WHICH ARE EACH PROVIDED WITH A FASTENING BEAD
RESSORT PNEUMATIQUE POUR VÉHICULES UTILITAIRES, COMPORTANT UN SOUFFLET ROULANT CONSTITUÉ D'UN MATÉRIAU ÉLASTOMÈRE DONT CHAQUE EXTRÉMITÉ EST MUNIE D'UN BOURRELET DE FIXATION

(30) Priorität: 10.12.2010 DE 102010061163
(43) Veröffentlichungstag der Anmeldung: 16.10.2013
(73) Patentinhaber: ContiTech Luftfedersysteme GmbH, 30165 Hannover (DE)
(72) Erfinder: STAHMER, Reinhard, 30823 Garbsen (DE); BALACHONZEW, Boris, 30823 Garbsen (DE)
(74) Vertreter: Kilsch, Armin Ralph
(86) Internationale Anmeldenummer: PCT/EP2011/066851
(87) Internationale Veröffentlichungsnummer: WO 2012/076209

(56) Entgegenhaltungen:
- DE-B3-102005 051 706
- US-A- 3 612 139

## Beschreibung

Die Erfindung betrifft eine Luftfeder für Nutzfahrzeuge mit einem ersten Anschlussteil, insbesondere in Form eines Deckels, mit einem zweiten Anschlussteil in Form eines Abrollkolbens und mit einem Rollbalg aus elastomerem Werkstoff, dessen Enden jeweils einen Befestigungswulst aufweisen, die mit je einem Wulstkern verstärkt sind, wobei das eine Ende des Rollbalges an dem ersten Anschlussteil und das andere Ende des Rollbalges an dem Abrollkolben dichtend angeordnet sind, und wobei mindestens einer der beiden Wulstkerne aus Kunststoff besteht.

Derartige Luftfedern sind bekannt und werden besonders häufig in Nutzfahrzeugen eingesetzt. Der Rollbalg der Luftfeder besteht aus einem elastomeren Material, vorzugsweise Gummi oder einem gummiähnlichen Kunststoff, und weist endseitige Befestigungswülste auf. Diese Befestigungswülste ermöglichen die Montage auf den Anschlusssteilen, wie Bördelplatten oder Abrollkolben. Die Kerne der Befestigungswülste bestehen üblicherweise aus Stahldrähten.

Es ist bekannt, die Anschlussteile wie Abrollkolben und/oder Deckel bzw. Anschlussplatten aus Stahl, Aluminium oder glasfaserverstärktem Kunststoff herzustellen.

Die Verwendung von Kunststoff für die Anschlussteile hat den Vorteil, dass Korrosion vermieden wird und sich Kosten- und Gewichtsvorteile gegenüber der Verwendung von Stahlteilen ergeben. Nachteilig wurde aber festgestellt, dass sich die Anschlussteile aus Kunststoff und die Befestigungswülste bei sehr hohen bzw. sehr tiefen Betriebstemperaturen der Luftfeder in unterschiedlichem Maße ausdehnen und die Luftfeder dadurch undicht wird, weil die Stahldrähte als Verstärkungskerne der Befestigungswülste und die Kunststoffanschlussteile unterschiedliche Ausdehnungsverhalten aufweisen.

Aus der DE 10 2008 055 509 A1 ist es bekannt, die Befestigungswülste des Rollbalges mit einem eingebetteten Wulstkern aus Kunststoff auszustatten, der im Spritzgussverfahren hergestellt ist. Der Befestigungswulst des einen Rollbalgendes ist konisch ausgebildet und liegt unter der Wirkung des Innendruckes des Rollbalges an der zugeordneten, konusförmigen Sitzfläche des Abrollkolbens dichtend an. Bei Bälgen mit konischen Dichtflächen sorgt der Wulstkern für einen festen Sitz und eine dauerhafte Vorspannung auf dem Konus. Das andere Rollbalgende weist einen bördelfähigen Befestigungswulst auf. Der Rand der abschließenden Bördelplatte wird um diesen Befestigungswulst dicht herumgebördelt.

Durch die Verwendung von Kunststoff für die Wulstkerne wird zwar die von den Stahldrähten als Verstärkungskerne auftretende Ausdehnungsproblematik vermieden, jedoch ist die Belastbarkeit dieser durch Spritzguss hergestellten Kunststoffkerne begrenzt. Die DE 10 2005 051 706 B3 beschreibt eine Luftfeder, wobei der Federbalg durch ein wickelbares Bindeelement aus Kunststoff am Kolben und Deckel befestigt ist.

Der Erfindung liegt die Aufgabe zugrunde, eine Luftfeder der eingangs beschriebenen Art derart auszugestalten, dass eine höhere Belastbarkeit des Befestigungswulstes bei gleichzeitiger Beibehaltung der durch die Verwendung von Kunststoff erzielten Vorteile erreicht wird.

Diese Aufgabe wird erfindungsgemäß dadurch gelöst, dass der bzw. die Wulstkerne aus einem mehrfach gewickelten, flachen Profilstrang aus glasfaserverstärktem Kunststoff bestehen.

Durch die Verwendung von mehrfach gewickelten Profilsträngen aus glasfaserverstärktem Kunststoff kann ein kostengünstiger, leichter und korrosionsbeständiger Wulstkern hergestellt werden, dessen Festigkeit mit der eines Wulstkerns aus Stahl oder Stahldraht vergleichbar ist.

Durch die Verwendung von glasfaserverstärktem Kunststoff im Wulstkern, der einen gleichen Ausdehnungskoeffizienten wie der in den Anschlussteilen verwendete glasfaserverstärkte Kunststoff besitzt, kann eine Luftfeder auch bei starken Temperaturschwankungen, sehr hohen oder sehr tiefen Betriebstemperaturen verwendet werden, ohne dass die Luftfeder undicht wird oder es zu einer Beschädigung von Teilen kommt. Der Wulstkern und die Anschlussteile dehnen sich unter Temperatureinfluss im gleichen Maße aus und gewährleisten so das Dichthalten der Luftfeder über den gesamten, beim Einsatz der Luftfeder zu erwartenden Temperaturbereich.

Sollte bei besonderen Einsatzbedingungen ein unterschiedliches Ausdehnungsverhalten von Anschlussteil aus Kunststoff und Wulstkern aus Kunststoff vorliegen, kann der Glasfaseranteil im Profilstrang des Wulstkernes verringert oder vergrößert werden, um die die Differenz im Ausdehnungsverhalten von Wulstkern und dem Anschlussteil auszugleichen, so dass die Dichtheit der Luftfeder nicht gefährdet ist.

Der Anteil der Glasfasern im Kunststoff kann je nach Einsatzzweck variiert werden. Dadurch ist es möglich, die Wulstkerne aus glasfaserverstärktem Kunststoffprofilstrang auch in Verbindung mit Anschlussteilen aus Stahl oder Aluminium zu verwenden. Ein hoher Glasfaseranteil verringert die Differenz im Ausdehnungsverhalten von Wulstkern und den aus Stahl oder Aluminium bestehenden Anschlussteilen, so dass die Dichtheit der Luftfeder nicht gefährdet ist.

In einer vorteilhaften Weiterbildung der Erfindung ist vorgesehen, dass der Wulstkern aus Polyamid mit einem Glasfaseranteil von 30% besteht.

In einer weiteren vorteilhaften Weiterbildung der Erfindung ist vorgesehen, dass das Polyamid PA 6.6 ist.

In einer weiteren vorteilhaften Weiterbildung der Erfindung ist vorgesehen, dass der Profilstrang aus glasfaserverstärktem Kunststoff für den Wulstkern durch Extrusion hergestellt ist. Der gewünschte Biegeradius für den Kern kann nach der Extrusion durch geeignete Verfahrensschritte, wie z.B. Biegen in einem Walzenstuhl, eingestellt werden.

Erfindungsgemäß ist es vorgesehen, dass der Profilstrang des Wulstkernes so ausgeführt ist, dass die Glasfasern in den randnahen Zonen des Profilstranges in Längsrichtung ausgerichtet sind. Vorteilhaft daran ist, dass die Glasfasern dadurch in Belastungsrichtung, d.h. in Umfangsrichtung, des Wulstkernes liegen und somit eine höhere Belastbarkeit des Befestigungswulstes ermöglicht wird.

Diese Ausrichtung der Glasfasern wird durch das flache Extrusionsprofil begünstigt, da die Kontaktflächen mit der Kunststoffschmelze bei der Extrusion vergrößert sind.

Erfindungsgemäß ist es vorgesehen, dass der Profilstrang des Wulstkerns mit einer Gummiummantelung versehen ist. Durch diese Gummiummantelung wird die Vulkanisation des Kunststoffkernes im Wulst erleichtert.

In weiterer Ausgestaltung der Erfindung weist der Profil strang einen rechteckigen Querschnitt auf.

Die erfindungsgemäßen Befestigungswülste mit glasfaserverstärktem, gewickeltem Kunststoffkern zeichnen sich durch eine hohe Festigkeit aus. Die Dichtheit des Luftfedersystems wird erhöht.

Anhand der Zeichnung wird ein Ausführungsbeispiel der Erfindung näher erläutert. Es zeigt
- Fig. 1: den Kunststoffkern in perspektivischer Ansicht;
- Fig. 2: den Kunststoffkern in der Draufsicht;
- Fig. 3: einen Querschnitt durch den Kunststoffkern gemäß Linie A -A in Fig. 2;
- Fig. 4: einen Detailausschnitt einer Luftfeder im Bereich des Konussitzes;
- Fig. 5: eine schematische Darstellung der Ausrichtung der Glasfasern in dem Profilstrang des Kunststoffkerns.

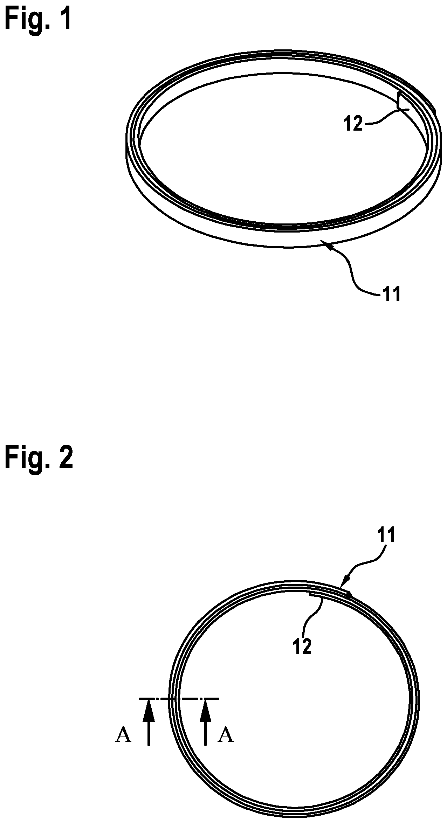

Der in Fig. 1 und Fig. 2 gezeigte Wulstkern 11 besteht aus einem Profilstrang 12 aus glasfaserverstärktem Kunststoff. Der flache, rechteckige Profilstrang 12 ist in mehreren Windungen zu einem ringförmigen Wulstkern 11 gewickelt.

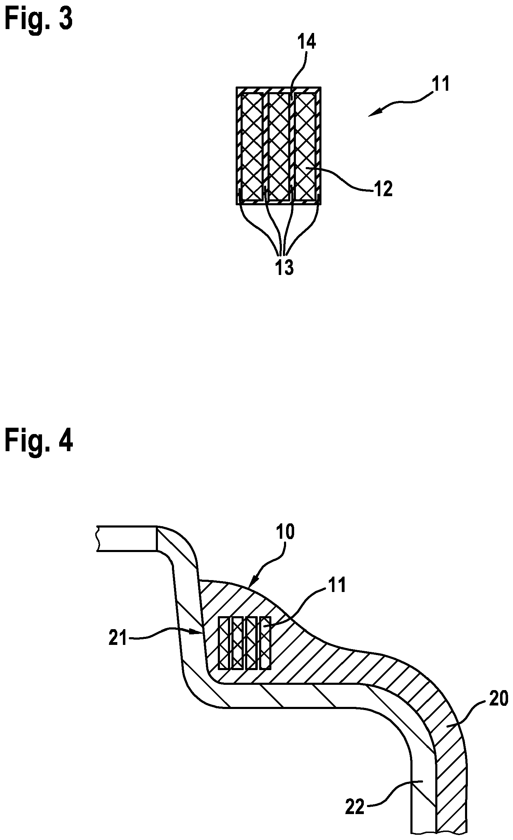

In Fig. 3 wird ein Querschnitt des gewickelten Wulstkernes 11 gezeigt. Der Profilstrang 12 weist eine Gummiummantelung 13 auf. Zwischen den einzelnen Windungen des Profilstranges 12 entsteht dadurch eine Zwischenschicht 14 aus Gummi. Durch die Gummiummantelung 13 wird die Vulkanisation des Wulstkernes 11 in einer Befestigungswulst des Rollbalges 20 vereinfacht und zwischen den Windungen des Profilstranges 12 ein besserer Zusammenhalt erzeugt.

In Fig. 4 wird eine Befestigungswulst 10 des Rollbalges 20 auf einem Konussitz 21 eines Abrollkolbens 22 gezeigt.

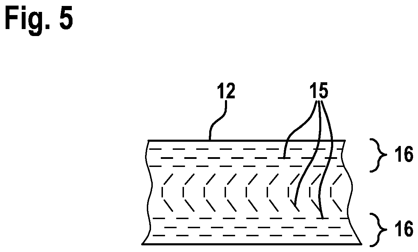

Die Fig. 5 zeigt die Ausrichtung der in den Kunststoff eingemischten Glasfasern 15 nach der Extrusion des Profilstranges 12. Die Glasfasern 15 sind in den Randbereichen 16 des Profilstranges 12 in Längsrichtung und damit in Umfangsrichtung des Wulstkernes 11 ausgerichtet. Der Wulstkern 11 kann durch diese Ausrichtung der Glasfasern 15 höhere Belastungen aufnehmen, ohne beschädigt zu werden.

### Bezugszeichenliste

- 10: Befestigungswulst
- 11: Wulstkern
- 12: Profilstrang
- 13: Gummiummantelung
- 14: Zwischenschicht
- 15: Glasfasern
- 16: Randbereich des Kunststoffprofils
- 20: Rollbalg
- 21: Konussitz
- 22: Abrollkolben

## Patentansprüche

1. Luftfeder für Nutzfahrzeuge mit einem ersten Anschlussteil, insbesondere in Form eines Deckels, mit einem zweiten Anschlussteil in Form eines Abrollkolbens und einem Rollbalg aus elastomerem Werkstoff, dessen Enden jeweils einen Befestigungswulst aufweisen, die mit je einem Wulstkern verstärkt sind, wobei das eine Ende des Rollbalges an dem ersten Anschlussteil und das andere Ende des Rollbalges an dem Abrollkolben dichtend angeordnet sind, wobei mindestens einer der beiden Wulstkerne aus Kunststoff besteht,
**dadurch gekennzeichnet,**
**dass** der bzw. die Wulstkerne (11) aus einem mehrfach gewickelten, flachen und mit einer Gummiummantelung (13) versehenen Profilstrang (12) aus glasfaserverstärktem Kunststoff bestehen und die Glasfasern (15) in den randnahen Zonen des Profilstrangs (12) in Längsrichtung ausgerichtet sind.

2. Luftfeder nach Anspruch 1, **dadurch gekennzeichnet, dass** der Wulstkern (11) aus Polyamid mit einem Glasfaseranteil von 30% besteht.

3. Luftfeder nach Anspruch 2, **dadurch gekennzeichnet, dass** das Polyamid PA 6.6 ist.

4. Luftfeder nach einem der vorherigen Ansprüche, **dadurch gekennzeichnet, dass** der Profilstrang (12) für den Wulstkern (11) durch Extrusion hergestellt ist.

5. Luftfeder nach einem der vorherigen Ansprüche, **dadurch gekennzeichnet, dass** der Profilstrang (12) des Wulstkerns (11) einen rechteckigen Querschnitt aufweist.

## Claims

1. Air spring for utility vehicles, having a first connection part, in particular in the form of a cover, having a second connection part in the form of a rolling piston, and having a rolling bellows composed of elastomeric material, the ends of which rolling bellows have in each case one fastening bead, said fastening beads being reinforced by means of in each case one bead core, wherein one end of the rolling bellows is sealingly arranged on the first connection part and the other end of the rolling bellows is sealingly arranged on the rolling piston, wherein at least one of the two bead cores is composed of plastic,
**characterized**
**in that** the one or more bead cores (11) is or are composed of a multiply wound, flat profile strand (12) provided with a rubber encapsulation (13) and composed of glass-fiber-reinforced plastic, and the glass fibers (15) in the edge-proximate zones of the profile strand (12) are oriented in the longitudinal direction.

2. Air spring according to Claim 1, **characterized in that** the bead core (11) is composed of polyamide with a glass fiber fraction of 30%.

3. Air spring according to Claim 2, **characterized in that** the polyamide is PA 6.6.

4. Air spring according to one of the preceding claims, **characterized in that** the profile strand (12) for the bead core (11) is produced by extrusion.

5. Air spring according to one of the preceding claims, **characterized in that** the profile strand (12) of the bead core (11) has a rectangular cross section.

## Revendications

1. Ressort pneumatique pour véhicules utilitaires, comprenant une première partie de raccordement, en particulier sous la forme d'un couvercle, une deuxième partie de raccordement sous la forme d'un piston de déroulage et un soufflet roulant en matériau élastomère, dont les extrémités présentent chacune un bourrelet de fixation, lesquels bourrelets sont à chaque fois renforcés par un noyau de bourrelet, l'une des extrémités du soufflet roulant étant disposée de manière hermétique sur la première partie de raccordement et l'autre extrémité du soufflet roulant étant disposée de manière hermétique sur le piston de déroulage, au moins l'un des deux noyaux de bourrelet se composant de matière plastique,
**caractérisé en ce que**
le ou les noyaux de bourrelet (11) se composent d'un tronçon profilé (12) en matière plastique renforcée par des fibres de verre, enroulé plusieurs fois, plat, et pourvu d'une gaine en caoutchouc (13), et les fibres de verre (15) dans les zones proches des bords du tronçon profilé (12) sont orientées dans la direction longitudinale.

2. Ressort pneumatique selon la revendication 1, **caractérisé en ce que** le noyau de bourrelet (11) se compose de polyamide ayant une proportion de fibre de verre de 30 %.

3. Ressort pneumatique selon la revendication 2, **caractérisé en ce que** le polyamide est du PA 6.6.

4. Ressort pneumatique selon l'une quelconque des revendications précédentes, **caractérisé en ce que** le tronçon profilé (12) pour le noyau de bourrelet (11) est fabriqué par extrusion.

5. Ressort pneumatique selon l'une quelconque des revendications précédentes, **caractérisé en ce que** le tronçon profilé (12) du noyau de bourrelet (11) présente une section transversale rectangulaire.
